# EUROPÄISCHE PATENTSCHRIFT

(11) **EP 3 693 178 B1**
(45) Veröffentlichungstag und Bekanntmachung des Hinweises auf die Patenterteilung: **04.10.2023**
(21) Anmeldenummer: 20156184.2
(22) Anmeldetag: 07.02.2020
(51) Int. Cl.: B41J 15/16, B41J 11/06, B41J 11/00, G01N 21/956, H04N 1/00

(54) **VORRICHTUNG UND VERFAHREN ZUM BEDRUCKEN EINES DRUCKSUBSTRATS**
DEVICE AND METHOD FOR PRINTING A PRINT SUBSTRATE
DISPOSITIF ET PROCÉDÉ D'IMPRESSION D'UN SUBSTRAT D'IMPRESSION

(30) Priorität: 08.02.2019 DE 102019103156
(43) Veröffentlichungstag der Anmeldung: 12.08.2020
(73) Patentinhaber: Bundesdruckerei GmbH, 10969 Berlin (DE)
(72) Erfinder: KIRSCHBAUER, Maximilian, 93444 Bad Kötzting (DE); KIRSCHBAUER, Josef Michael, 93476 Blaibach (DE); WALTHER, Ronny, 93426 Roding (DE)
(74) Vertreter: Bittner, Thomas L.

(56) Entgegenhaltungen:
- EP-A1- 0 167 196
- EP-A1- 3 335 894
- WO-A1-2011/086718
- DE-A1-102006 015 828
- DE-A1-102009 003 445
- JP-A- 2008 012 812
- JP-A- 2015 182 394
- US-A1- 2012 042 799
- US-B2- 9 004 647

## Beschreibung

Die Erfindung betrifft eine Vorrichtung sowie ein Verfahren zum Bedrucken eines Drucksubstrats.

### Hintergrund

Beim Bedrucken eines Materials in einer Druckvorrichtung oder einem Drucksystem kann das Material als Endlosmaterial auf einer Rolle bereitgestellt werden. Alternativ kann vorgesehen sein, einzelne Bögen der Druckvorrichtung nacheinander zuzuführen, um die Bögen jeweils individuell zu bedrucken. Beim Bedrucken von Endlosmaterial, kann das Endlosmaterial nach dem Drucken vereinzelt werden, um einzelne bedruckte Bögen zu erhalten.

Das Dokument DE 10 2016 102 565 A1 offenbart ein Verfahren und eine Vorrichtung zum Herstellen eines vereinzelten Bogens für eine Druckvorrichtung. Bei dem Verfahren werden in Magazin- oder Puffereinrichtungen verschiedene Bogenmaterialien als Endlosmaterial bereitgestellt, wobei den Magazineinrichtungen ausgangsseitig jeweils ein Transportweg zu einer Materialweiche, in welcher die Transportwege zusammenlaufen, nachgelagert ist. Es werden Transporteinrichtungen bereitgestellt, die jeweils einem der Transportwege zugeordnet und eingerichtet sind, die verschiedenen Bogenmaterialien von der Magazineinrichtung wenigstens zur Materialweiche zu transportieren. In den Transporteinrichtungen werden Steuersignale empfangen, die eine einem Druckauftrag entsprechende Materialauswahl für ein ausgewähltes der Bogenmaterialien bestimmen. Die Transporteinrichtungen werden gemäß den Steuersignalen gesteuert, derart, dass das ausgewählte Bogenmaterial zu der Materialweiche transportiert wird und in der Materialweiche aus dem Transportweg in einen Zuführweg gelangt, in welchen die Transportwege münden. Das ausgewählte Bogenmaterial wird mittels der Transporteinrichtungen über den Zuführweg von der Materialweiche zu einer Vereinzelungseinrichtung transportiert. In der Vereinzelungseinrichtung wird ein vereinzelter Bogen zum anschließenden Bedrucken hergestellt, indem der vereinzelte Bogen von dem ausgewählten Bogenmaterial abgetrennt wird.

In dem Dokument DE 10 2016 102 566 A1 sind ein Verfahren und eine Vorrichtung zum Bedrucken eines vereinzelten Bogens beschrieben.

In US 7,744,210 B2 wird ein System zum schrittweisen Transport von Aufzeichnungsmedien in einem Digitaldrucker beschrieben. Das Medium wird mit Hilfe von sich bewegenden Tischen transportiert, an denen das Medium mittels Unterdruck während der Bewegung gehalten wird. Der Drucktisch, auf dem der Drucker den Druck ausführt, wird zu jeder Zeit vollständig durch einen statischen Tisch gebildet.

DE 42 21 966 A1 offenbart eine Schneid- oder Zeichenvorrichtung für die Bearbeitung von blatt- und bahnförmigem Material mittels eines Schneid- oder Zeichenwerkzeugs, das in Richtung quer zur Materialvorschubrichtung über eine das Material aufnehmende Arbeitsfläche hin und her bewegbar ist. Die Arbeitsfläche wird durch eine Anordnung von Trägerelementen mit zwei Gruppen gebildet, von denen jeweils ein Trägerelement der einen Gruppe benachbart zu einem Trägerelement der anderen Gruppe angeordnet ist. Die Trägerelemente jeder Gruppe sind unabhängig von den Trägerelementen der anderen Gruppe gemeinsam in Vorschubrichtung hin und her bewegbar und bilden in jeder Betriebsstellung im Bereich der Hin und Her-Bewegung des Schneid- oder Zeichenwerkzeugs eine im wesentlichen durchgehende Arbeitsfläche. An die Trägerelemente jeder Gruppe kann unabhängig von den Trägerelementen der anderen Gruppe ein auf das Material wirkender, dieses positioniert haltender Unterdruck angelegt werden.

Das Dokument DE 196 81 284 B4 offenbart einen Kartendrucker, der mit einem Kartenzuführmechanismus zum Vorwärtsführen der in einem Kartenspeicher in gestapeltem Zustand gehaltenen Karten, einem Kartenhaltetisch zum Halten einer von dem Kartenzuführmechanismus zugeführten Karte auf seiner Oberseite, der in Vorwärts- und Rückwärtsrichtung hin und her bewegt wird, versehen ist, einen Druckkopf, der über dem Kartenhaltetisch positioniert ist und in der Lage ist, zwischen dem Zustand, in dem der Druckkopf die Karte auf dem Kartenhaltetisch über ein Farbband R berührt, und dem Zustand, in dem der Druckkopf von der Karte nach oben beabstandet ist, zu wählen.

JP 2018 165 001 A offenbart eine Druckvorrichtung mit einem Drucktisch aus einem porösen Keramikmaterial. Vor und nach dem Drucktisch sind Saugwalzen aus dem porösen Keramikmaterial angeordnet. Ein Druckmedium kann durch Anlegen eines Unterdrucks die dadurch erzielte Saugwirkung mittels der Rollen transportiert werden. Während des Druckens wird das Medium dagegen durch die Saugwirkung an dem Drucktisch gehalten.

Das Dokument DE 10 2009 003 445 A1 beschreibt ein Verfahren und eine Vorrichtung zum Bedrucken einer Bahn, insbesondere aus Papier. Hierbei wird zunächst eine zu bedruckende Bahn von einer Vorratsrolle abgewickelt. Ferner wird ein Abschnitt der Bahn an einem Schlitten fixiert, wobei der Schlitten relativ zu einer Farbauftragseinrichtung in eine Vorschubrichtung verfahren wird, um einen streifenförmigen Abschnitt auf die Bahn zu drucken. Anschließend wird der bedruckte Abschnitt der Bahn (4) auf einer Rolle (12) aufgewickelt.

In dem Dokument JP 2008 012 812 A ist ein Drucker offenbart, der eine Förderwalze, einen Tisch zum Fixieren eines Mediums durch Ansaugen, einen Druckabschnitt und eine Mediumhalteeinheit zum Halten des Mediums wenigstens über einen Transportweg von der Förderwalze bis zum Tisch aufweist. Ein Halteeinheits-Antrieb ist vorgesehen zum Bewegen sowohl der Förderwalze als auch des Tisches durch Bewegen der Mediumhalteeinheit in der Transportrichtung des Mediums, um so das Medium zum Druckabschnitt zu bewegen, und zum Zurückbringen der Mediumhalteeinheit in dem Fall, dass die Mediumhalteeinheit um einen vorbestimmten Abstand in die Transportrichtung bewegt wurde. Ein Tischantrieb dient zum Bewegen des Tisches in der Transportrichtung relativ zur Förderwalze in dem Fall, dass der Halteeinheits-Antrieb die Mediumhalteeinheit zurückbewegt.

US 2012/042799 A1 Aufzeichnungsvorrichtung mit einem Werkstücktisch, der durch Ansaugen einen Aufzeichnungsbereich eines länglichen Werkstücks hält, das in einer ersten Vorschubrichtung zugeführt wird, einer Aufzeichnungseinheit, die eine Aufzeichnung in dem Aufzeichnungsbereich durchführt, einer Werkstückhalteeinheit, die auf einer stromabwärtigen Seite des Werkstücktischs angeordnet ist und einen Abschnitt des Werkstücks unbeweglich hält und freigibt, einer Vorschub- / Rückzugseinheit, die bewirkt, dass sich der Werkstücktisch und die Werkstückhalteeinheit in einer Erstreckungsrichtung des Werkstücks relativ voneinander wegbewegen, und einer Steuereinheit, welche die einzelnen Konfigurationen steuert. Die Steuereinheit führt einen Aufzeichnungsvorgang, einen Haltevorgang zum unbeweglichen Halten eines Teils des Werkstücks und einen Vorschub- / Rückzugsvorgang aus, zum Zurückziehen des Aufzeichnungsbereichs, in dem die Aufzeichnung abgeschlossen wurde, von dem Werkstücktisch und zum Bewegen des Aufzeichnungsbereichs, in dem die Aufzeichnung noch zu erfolgen hat, auf den Werkstücktisch.

Das Dokument WO 2011 / 086 718 A1 offenbart einen Tintenstrahldrucker, bei dem Druckqualitäten auf Rollenpapier aufrechterhalten werden können.

In dem Dokument JP 2015 182 394 A ist ein Drucker offenbart, der in der Lage ist, die Aufzeichnung stabil fortzusetzen, selbst wenn eine Ausstoßanomalie an einer Hauptdüse auftritt.

Bei dem Dokument US 9 004 647 B2 wird ein System und Verfahren zum Aufbringen einer Substanz auf ein sich kontinuierlich bewegendes Substrat in ersten und zweiten Querbändern durch Bereitstellen eines Druckwagens mit einem ersten Satz Tintenstrahlköpfen und einem zweiten Satz Tintenstrahlköpfen erreicht.

Zum Bedrucken eines Endlosmaterials ist das Endlosmaterial durch die Druckvorrichtung oder das Drucksystem zu transportieren, wobei die Transportbewegung auf den Druckvorgang abzustimmen ist und ein Transport unter geeigneten Bedingungen durch die gesamte Druckvorrichtung oder das gesamte Drucksystem sichergestellt werden muss, wobei insbesondere im Bereich der für das Bedrucken zuständigen Komponenten die Anforderungen zu erfüllen sind, welche sich durch den Druckvorgang selbst ergeben.

### Zusammenfassung

Aufgabe der Erfindung ist es, eine Vorrichtung sowie ein Verfahren zum Bedrucken eines Drucksubstrats mit einem verbesserten Transport eines Drucksubstrats anzugeben. Hierbei soll insbesondere der Vorschub des Drucksubstrats in der Vorrichtung verbessert werden.

Zur Lösung sind eine Vorrichtung sowie ein Verfahren zum Bedrucken eines Drucksubstrats nach den unabhängigen Ansprüchen 1 und 9 geschaffen. Ausgestaltungen sind Gegenstand von abhängigen Unteransprüchen.

Nach einem Aspekt ist eine Vorrichtung zum Bedrucken eines Drucksubstrats geschaffen. Die Vorrichtung weist ein Druckkopfshuttle mit wenigstens einem Druckkopf auf, der eingerichtet ist, zum Erzeugen eines Druckbildes ein Druckmittel auf ein Drucksubstrat aufzubringen, wobei das Drucksubstrat ein Bahnmaterial ist, welches entlang eines Bahnwegs verlagerbar ist, und das Druckkopfshuttle auf einer ersten Seite des Drucksubstrats angeordnet ist. Ein Drucktisch ist dem Druckkopfshuttle gegenüber auf einer zweiten Seite des Drucksubstrats angeordnet. Der Drucktisch weist eine Halteeinrichtung auf, die eingerichtet ist, das Drucksubstrat zu halten, derart, dass zum Bedrucken eine Relativbewegung zwischen dem Drucktisch und dem Drucksubstrat verhindert ist. Der Drucktisch ist eingerichtet, eine Vorschubbewegung auszuführen, während die Halteeinrichtung das Drucksubstrat hält, derart, dass die Vorschubbewegung auf das Drucksubstrat übertragen wird und der Drucktisch eine Vorschubbewegung des Drucksubstrats entlang des Bahnwegs bewirkt.

Nach einem weiteren Aspekt ist ein Verfahren zum Bedrucken eines Drucksubstrats geschaffen. Das Verfahren umfasst: Aufbringen eines Druckmittels auf ein Drucksubstrat, welches ein Bahnmaterial ist, welches entlang eines Bahnwegs verlagerbar ist, mit wenigstens einem Druckkopf eines Druckkopfshuttles, welches auf einer ersten Seite des Drucksubstrats angeordnet ist, zum Erzeugen eines Druckbildes; Halten des Drucksubstrats, mit einer Halteeinrichtung eines Drucktischs, der dem Druckkopfshuttle gegenüber auf einer zweiten Seite des Drucksubstrats angeordnet ist, derart, dass zum Bedrucken eine Relativbewegung zwischen dem Drucktisch und dem Drucksubstrat verhindert ist; und Verlagern des Drucksubstrats entlang des Bahnwegs, wobei der Drucktisch eine Vorschubbewegung ausführt, während die Halteeinrichtung das Drucksubstrat hält, derart, dass die Vorschubbewegung auf das Drucksubstrat übertragen wird und der Drucktisch eine Vorschubbewegung des Drucksubstrats entlang des Bahnwegs bewirkt.

Erfindungsgemäß wird die Vorschubbewegung des Bahnmaterials somit mittels des Drucktischs bewirkt, indem es von dem Drucktisch festgehalten und mit der Bewegung des Drucktisches in die Vorschubrichtung mitgenommen wird. Das Drucksubstrat bzw. Bahnmaterial kann so auf einfache Weise im Bereich des Druckkopfshuttles bewegt werden, welches auf einer dem Drucktisch gegenüberliegenden Seite des Bahnmaterials angeordnet ist, insbesondere derart, dass das Drucksubstrat mittels des Druckkopfshuttles bedruckt werden kann, während es auf dem Drucktisch aufliegt und von der Halteeinrichtung gehalten wird. Zum einen kann die Halteeinrichtung, welche ohnehin dazu vorgesehen ist, eine Relativbewegung zwischen dem Drucksubstrat und dem Drucktisch während des Druckens zu verhindern, dazu genutzt werden, das Drucksubstrat zu transportieren, indem das Drucksubstrat festgehalten und der Drucktisch bewegt wird. Zum anderen können so Falten, Stauchungen, Dehnungen oder dergleichen, welche durch separate Transporteinrichtungen, wie beispielweise Rollen, vor und nach dem Drucktisch entstehen können, reduziert oder vermieden werden. Dennoch können gegebenenfalls zusätzlich eine oder mehrere Vorschubeinrichtungen vorgesehen sein, welche einen Vorschub des Drucksubstrats entlang des Bahnwegs bewirken. Zum Beispiel kann der Drucktisch eine Vorschubbewegung des Drucksubstrats entlang des Bahnwegs bewirken, wobei eine oder mehrere zusätzliche Vorschubeinrichtung, wie zum Beispiel Transportrollen, die Vorschubbewegung des Drucksubstrats unterstützen.

Die Halteeinrichtung ist eingerichtet, das Drucksubstrat während einer Vorschubbewegung des Drucksubstrats zu halten, derart, dass eine Relativbewegung zwischen dem Drucktisch und dem Drucksubstrat während der Vorschubbewegung verhindert ist. Dies verbessert den Transport, wenn nicht nur während des Bedruckens, sondern insbesondere auch während der Vorschubbewegung mittels des Drucktisches eine Relativbewegung zwischen dem Drucktisch und dem Drucksubstrat verhindert wird. Gegebenenfalls kann so das Drucksubstrat auch während der Vorschubbewegung bedruckt werden, da die relative Position des Drucksubstrats zu dem Drucktisch sowohl während des Bedruckens als auch während der Vorschubbewegung fixiert ist.

Der Drucktisch ist eingerichtet, das Drucksubstrat in einer Vorschubrichtung an dem Drucckopfshuttle vorbeizubewegen, wobei das Druckkopfshuttle eingerichtet ist, das Drucksubstrat während der Bewegung des Drucksubstrats zu bedrucken. Dies erlaubt ein schnelles und effizientes Bedrucken des Bahnmaterials, da das Bedrucken auch während der Vorschubbewegung stattfindet und nicht zum Drucken einer Zeile angehalten werden muss.

Der Drucktisch kann insbesondere eingerichtet sein, das Bahnmaterial in einer Vorschubrichtung durch die Druckvorrichtung zu bewegen, wobei der Drucktisch in die Vorschubrichtung sowie entgegen der Vorschubrichtung beweglich ist. Während das Bahnmaterial mittels der Halteeinrichtung an dem Drucktisch gehalten wird, bewegt sich der Drucktisch in die Vorschubrichtung von einer hinteren Stellung in eine vordere Stellung und zieht so das Bahnmaterial, beispielsweise von einer Rolle, in Vorschubrichtung durch die Druckvorrichtung. Anschließend kann die Halteeinrichtung das Bahnmaterial freigeben, so dass dieses von dem Drucktisch gelöst ist. Der Drucktisch kann sich dann entgegen der Vorschubrichtung an dem Bahnmaterial vorbei von der vorderen in die hintere Stellung bewegen. Anschließend kann dann mittels der Halteeinrichtung erneut ein Kontakt zu dem Bahnmaterial ausgebildet werden, worauf sich die Bewegung des Drucktischs in die Vorschubrichtung wiederholt.

Die Halteeinrichtung umfasst eine Vakuumeinrichtung, welche das Drucksubstrat mittels eines Unterdrucks oder Vakuums an den Drucktisch ansaugt. Die Vakuumvorrichtung kann einen Unterdruck erzeugen. Die Vakuumvorrichtung ist über Kanäle mit einer Auflagefläche des Drucktischs mit der Umgebung verbunden, so dass das Drucksubstrat mittels des Unterdrucks an die Auflagefläche des Drucktischs angesaugt wird, um das Drucksubstrat zu halten. Zumindest ein Abschnitt des Drucktischs, welcher die Auflagefläche umfasst, ist aus einem porösen Material, wobei die Kanäle, welche die Vakuumvorrichtung mit der Auflagefläche verbinden, durch die Porosität des Materials bereitgestellt sind. Die Porosität des Materials kann eine definierte Porosität sein. Durch die definierte Porosität des Materials können undefinierte, statistisch gleichmäßig verteilte Kanäle bereitgestellt sein, welche zu einem gleichmäßigen Ansaugen und Halten des Drucksubstrats an der Auflagefläche führen. Beispielswiese kann eine solche definierte Porosität durch Sintern eines Materials des Drucktischs erreicht werden. Alternativ können die Kanäle mit einem definierten Raster von Bohrungen, beispielsweise Mikrobohrungen, bereitgestellt sein, welche sich durch den Drucktisch hindurch erstrecken und insbesondere in der Auflagefläche münden.

Die Haltereinrichtung kann zusätzlich eine Greifeinrichtung umfassen, welche das Drucksubstrat greift, um es zu halten. Beispielsweise kann die Greifeinrichtung Klemmen umfassen, welche das Drucksubstrat zwischen dem Drucktisch und den Klemmen einklemmen und so fassen und halten.

Das Druckkopfshuttle kann eingerichtet sein, zum Bedrucken eine Bewegung vor und entgegen einer quer zu der Vorschubrichtung des Drucksubstrats verlaufenden Shuttlebewegungsrichtung auszuführen. Durch die Vorschubbewegung des Drucksubstrats und die Bewegung des Druckkopfshuttles kann eine Positionierung des Druckkopfshuttles über dem Drucksubstrat bereitgestellt sein, welche das Erzeugen eines Druckbilds auf dem Drucksubstrat ermöglicht. Alternativ oder zusätzlich kann das Druckkopfshuttle eingerichtet sein, eine Bewegung vor und entgegen einer parallel zu der Vorschubrichtung des Drucksubstrats verlaufenden Parallel-Shuttlebewegungsrichtung auszuführen.

Das Bahnmaterial kann ein Folienmaterial sein. Das Folienmaterial kann ein Kunststoff-Folienmaterial sein, beispielsweise aus Polycarbonat (PC) oder Polyvinylchlorid (PVC). Das Bahnmaterial kann ein dünnes Bahnmaterial sein. Das dünne Bahnmaterial kann eine Material-Dicke von 100 µm oder weniger haben. Zum Beispiel kann das Bahnmaterial eine Dicke von 75 µm haben. Das Bahnmaterial kann mit einer Breite bereitgestellt sein, welche einer gewünschten Breite des Druckbilds, gegebenenfalls zuzüglich notwendiger Seitenränder, entspricht. Beispielsweise kann das Bahnmaterial mit einer Breite von 300 mm bis 600 mm bereitgestellt sein. Es kann eine Speichereinrichtung vorgesehen sein, aus welcher das Bahnmaterial dem Druckvorgang zugeführt wird. Beispielsweise kann die Vorrichtung eine Vorratsrolle umfassen, auf der das Bahnmaterial aufgerollt ist und von der das Bahnmaterial im Betrieb gezogen wird.

Die Vorrichtung kann weiterhin eine erste Bahnspannungsmesseinrichtung aufweisen, welche entlang des Bahnwegs vor dem Drucktisch angeordnet und eingerichtet ist, erste Messdaten zu erzeugen, welche eine mechanische Bahnspannung des Drucksubstrats an der ersten Bahnspannungsmesseinrichtung angeben, eine erste Spannvorrichtung, welche entlang des Bahnwegs vor dem Drucktisch angeordnet und eingerichtet ist, eine mechanische Bahnspannung des Drucksubstrats einzustellen, eine zweite Bahnspannungsmesseinrichtung, welche entlang des Bahnwegs nach dem Drucktisch angeordnet und eingerichtet ist zweite Messdaten zu erzeugen, welche eine mechanische Bahnspannung des Drucksubstrats an der zweiten Bahnspannungsmesseinrichtung angeben, und eine zweite Spannvorrichtung, welche entlang des Bahnwegs nach dem Drucktisch angeordnet und eingerichtet ist, eine mechanische Bahnspannung des Drucksubstrats einzustellen, sowie eine Steuervorrichtung auf. Die Steuervorrichtung kann eingerichtet sein, die ersten Messdaten zu empfangen, anhand der ersten Messdaten erste Steuerdaten zu erzeugen und die erste Spannvorrichtung entsprechend den ersten Steuerdaten anzusteuern, derart, dass die erste Spannvorrichtung eine erste vorgegebene Bahnspannung des Drucksubstrats an der ersten Spannvorrichtung bewirkt, und die zweiten Messdaten zu empfangen, anhand der zweiten Messdaten zweite Steuerdaten zu erzeugen und die zweite Spannvorrichtung entsprechend den zweiten Steuerdaten anzusteuern, derart, dass die zweite Spannvorrichtung eine zweite vorgegebene Bahnspannung des Drucksubstrats an der zweiten Spannvorrichtung bewirkt. Die Steuervorrichtung kann eingerichtet sein, während eines Druckvorgangs die Bahnspannung des Drucksubstrats entlang des Bahnwegs vor dem Drucktisch konstant zu halten und die Bahnspannung des Drucksubstrats entlang des Bahnwegs hinter dem Drucktisch konstant zu halten. Somit können gleichbleibende Druckbedingungen sichergestellt sein, bei denen die Bahnspannung vor dem Drucktisch und die Bahnspannung hinter dem Drucktisch konstant bleiben.

Die Vorrichtung kann eine Aussonderungseinrichtung umfassen. Die Aussonderungseinrichtung kann eine Prüfvorrichtung, eine Konfektioniereinrichtung und eine Dokumentenweiche umfassen. Die Prüfvorrichtung kann mit einer Bildaufnahmeeinrichtung gebildet und eingerichtet sein, ein Bild des Druckbilds auf dem Bahnmaterial aufzunehmen, das aufgenommene Bild des Druckbilds auf dem Bahnmaterial mit Vergleichs-Bilddaten zu vergleichen, das Druckbild als ein korrektes Druckbild zu bestimmen, wenn anhand des Vergleichs des Druckbilds auf dem Bahnmaterial mit den Vergleichs-Bilddaten eine Übereinstimmung zwischen dem Druckbild und den Vergleichs-Bilddaten festgestellt wird, und das Druckbild als ein nicht-korrektes Druckbild zu bestimmen, wenn anhand des Vergleichs des Druckbilds auf dem Bahnmaterial mit den Vergleichs-Bilddaten keine Übereinstimmung zwischen dem Druckbild und den Vergleichs-Bilddaten festgestellt wird.

Die Konfektioniereinrichtung kann eingerichtet sein, das Bahnmaterial zu einzelnen Bögen zu konfektionieren und die Dokumentenweiche kann eingerichtet sein, einen konfektionierten Bogen auf einen von einem ersten Transportweg und einem zweiten Transportweg zu leiten, wobei ein konfektionierter Bogen mit einem Druckbild, welches als ein korrektes Druckbild bestimmt wurde, auf den ersten Transportweg geleitet wird und ein konfektionierter Bogen mit einem Druckbild, welches als ein nicht-korrektes Druckbild bestimmt wurde, auf den zweiten Transportweg geleitet wird.

Entlang des zweiten Transportwegs kann eine Makulatureinrichtung angeordnet sein, welche einen konfektionierten Bogen mit einem Druckbild, welches als ein nicht-korrektes Druckbild bestimmt wurde, zerstört. Hierdurch kann eine Wiederverwendung des konfektionierten Bogens mit einem Druckbild, welches als ein nicht-korrektes Druckbild bestimmt wurde, ausgeschlossen sein. Alternativ oder zusätzlich können sensible Daten unkenntlich gemacht werden. Zum Beispiel kann die Makulatureinrichtung eine Schneideinrichtung sein, welche den konfektionierten Bogen mit einem Druckbild, welches als ein nicht-korrektes Druckbild bestimmt wurde, zerschneidet. Die Schneideinrichtung kann den Bogen in Streifen schneiden. Parameter der Schneideinrichtung können einstellbar sein. Beispielsweise kann eine Streifenbreite der geschnittenen Streifen einstellbar sein. Der zerstörte Bogen, beispielsweise die Streifen zu denen der Bogen zerschnitten wurde, können in einem Ausschussbehälter gesammelt werden. Der zweite Transportweg kann in den Ausschussbehälter führen.

Die in Verbindung mit der Vorrichtung zum Bedrucken eines Drucksubstrats erläuterten Ausgestaltungen können bei dem Verfahren zum Bedrucken eines Drucksubstrats entsprechend vorgesehen sein.

### Beschreibung von Ausführungsbeispielen

Im Folgenden werden weitere Ausführungsbeispiele unter Bezugnahme auf Zeichnungen näher erläutert. Hierbei zeigen:
- Fig. 1: eine schematische Übersicht einer Druckvorrichtung zum Bedrucken eines Drucksubstrats;
- Fig. 2: eine schematische Übersicht einer Anordnung eines Drucktischs und eines Drucckopfshuttles in einer Druckvorrichtung;
- Fig. 3: eine schematische Übersicht weiterer Ausgestaltungsoptionen einer Druckvorrichtung; und
- Fig. 4: eine schematische Übersicht einer weiteren Druckvorrichtung zum Bedrucken eines Drucksubstrats.

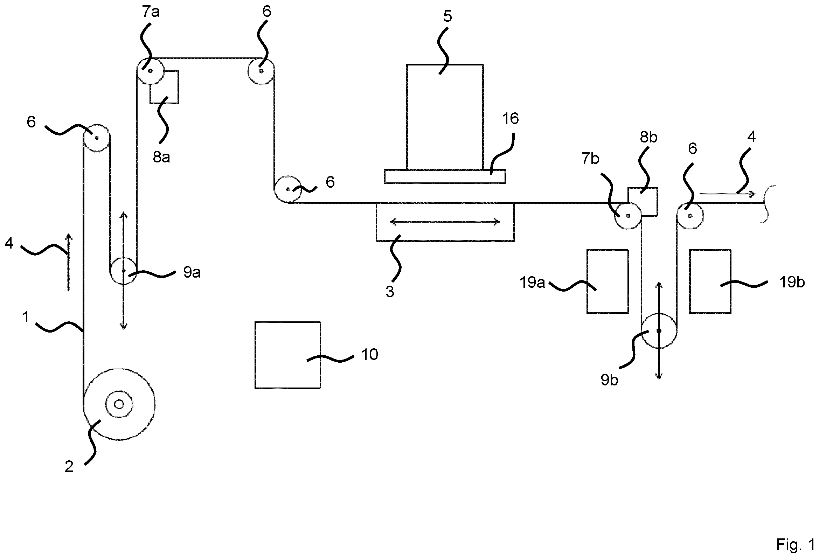

Die Fig.1 zeigt eine Druckvorrichtung zum Bedrucken eines Drucksubstrats. Bei dem Drucksubstrat handelt es sich um ein Bahnmaterial 1 auf einer Rolle 2, welche als Speichereinrichtung für das Bahnmaterial 1 dient. Bei dem Bahnmaterial 1 kann es sich um eine Kunststofffolie handeln. In einem Beispiel handelt es sich bei dem Bahnmaterial 1 um eine Polycarbonat-Folie mit einer Dicke von 75 µm und einer Breite von 600 mm. In weiteren Beispiel kann das Bahnmaterial aus einem anderen Werkstoff bestehen, beispielsweise PVC, eine größere oder kleinere Dicke haben, beispielsweise 100 µm, und / oder eine kleinere oder größere Breite haben, beispielsweise 300 mm.

Das Bahnmaterial wird mittels eines Drucktischs 3 in einer Vorschubrichtung 4 durch die Druckvorrichtung bewegt. Hierzu ist der Drucktisch 3 in die Vorschubrichtung 4 sowie entgegen der Vorschubrichtung 4 beweglich. Der Drucktisch 3 ist als zusammenhängende Einheit ausgebildet oder er bewegt sich zumindest als eine Einheit, um einen über die Breite des Bahnmaterials 1 hinweg gleichmäßigen Vorschub des Bahnmaterials 1 zu unterstützen. Der Drucktisch 3 weist eine Halteeinrichtung auf, mittels derer das Bahnmaterial 1 gehalten wird. Während das Bahnmaterial 1 mittels der Halteeinrichtung an dem Drucktisch 3 gehalten wird, bewegt sich der Drucktisch in die Vorschubrichtung 4 von einer hinteren Stellung in eine vordere Stellung und zieht so das Bahnmaterial 1 von der Rolle 2 in Vorschubrichtung 4 durch die Druckvorrichtung. Anschließend gibt die Halteeinrichtung das Bahnmaterial 1 frei, so dass dieses von dem Drucktisch 3 gelöst ist. Der Drucktisch 3 bewegt sich dann entgegen der Vorschubrichtung 4 an dem Bahnmaterial 1 vorbei von der vorderen in die hintere Stellung und bildet anschließend mittels der Halteeinrichtung erneut einen Kontakt zu dem Bahnmaterial 1 aus, worauf sich die Bewegung des Drucktischs 3 in die Vorschubrichtung 4 wiederholt. Es ist so eine diskontinuierliche Fortbewegung des Bahnmaterials 1 durch die Druckvorrichtung bereitgestellt.

In weiteren Ausgestaltungen können zusätzliche Antriebsmechanismen vorgesehen sein, welche die mittels des Drucktischs 3 bereitgestellte Fortbewegung des Bahnmaterials 1 unterstützen. Beispielsweise können angetriebene Rollen, über die das Bahnmaterial 1 verläuft und welche das Bahnmaterial 1 unterstützend fortbewegen, entlang eines Bahnwegs des Bahnmaterials 1 vor und / oder hinter dem Drucktisch 3 angeordnet sein. Insbesondere kann ein unterstützender Antriebsmechanismus entlang des Bahnwegs des Bahnmaterials 1 hinter dem Drucktisch 3 angeordnet sein, um eine Bewegung des Bahnmaterials 1 von dem Drucktisch 3 weg zu unterstützen.

Auf einer dem Drucktisch 3 gegenüberliegenden Seite des Bahnmaterials 1 ist ein Drucckopfshuttle 5 angeordnet. Das Druckkopfshuttle 5 ist bezüglich des Bahnmaterials 1 dem Drucktisch 3 derart gegenüberliegend angeordnet, dass das Bahnmaterial 1 zwischen dem Drucktisch 3 und dem Druckkopfshuttle 5 verläuft, sodass es mittels des Druckkopfshuttles 5 bedruckt werden kann, während es auf dem Drucktisch 3 aufliegt und von der Halteeinrichtung gehalten wird. Der Drucktisch 3 bewegt das Bahnmaterial in der Vorschubrichtung 4 an dem Druckkopfshuttle 5 vorbei. Während der Bewegung des Bahnmaterials bedruckt das Druckkopfshuttle 5 das Bahnmaterial 1.

Bei der Bewegung durch die Druckvorrichtung verläuft das Bahnmaterial 1 über mehrere Umlenkrollen 6, mittels derer das Bahnmaterial 1 innerhalb der Druckvorrichtung umgelenkt wird. Das Bahnmaterial verläuft auch über Bahnspannungsmessrollen 7, mittels derer eine Bahnspannung des Bahnmaterials 1 gemessen wird. Wie in der Fig. 1 gezeigt, ist eine erste Bahnspannungsmessrolle 7a entlang des Bahnwegs des Bahnmaterials 1 vor dem Drucktisch angeordnet. Die erste Bahnspannungsmessrolle 7a misst somit die Bahnspannung des Bahnmaterials 1 vor dem Drucktisch 3. Durch das Halten des Bahnmaterials 1 mittels der Halteeinrichtung an dem Drucktisch 3 kann entlang des Bahnwegs des Bahnmaterials 1 hinter dem Drucktisch 3 eine Bahnspannung des Bahnmaterials 1 auftreten, welche von der Bahnspannung vor dem Drucktisch 3 unabhängig ist. Aus diesem Grund ist eine zweite Bahnspannungsmessrolle 7b entlang des Bahnwegs des Bahnmaterials 1 hinter dem Drucktisch angeordnet. Die zweite Bahnspannungsmessrolle 7b misst somit die Bahnspannung des Bahnmaterials 1 hinter dem Drucktisch 3. Die Bahnspannung des Bahnmaterials 1 verursacht eine jeweilige Kraft auf die Achsen der Bahnspannungsmessrollen 7a, 7b. Mittels einer jeweiligen Sensoreinrichtung 8a, 8b der Bahnspannungsmessrollen 7a, 7b wird die jeweilige Kraft auf die Achse der Bahnspannungsmessrollen 7a, 7b gemessen. Die jeweilige Sensoreinrichtung 8a, 8b der ersten 7a und der zweiten 7b Bahnspannungsmessrolle erzeugt erste bzw. zweite Messdaten, welche die jeweilige Bahnspannung des Bahnmaterials 1 an der ersten Bahnspannungsmessrolle 7a bzw. an der zweiten Bahnspannungsmessrolle 7b angeben.

Weiterhin verläuft das Bahnmaterial über so genannte Tänzer 9. Hierbei handelt es sich um Rollen, welche beweglich angeordnet sind, um eine Spannung des Bahnmaterials 1 einzustellen. Wie in der Fig. 1 zu erkennen ist ein erster Tänzer 9a entlang des Bahnwegs des Bahnmaterials 1 vor dem Drucktisch angeordnet. Der erste Tänzer 9a ist in dem gezeigten Beispiel nach oben und unten beweglich, wobei eine Bewegung des ersten Tänzers 9a nach unten zu einer Erhöhung der Spannung des Bahnmaterials 1 führt und eine Bewegung des ersten Tänzers 9a nach oben zu einer Verringerung der Spannung des Bahnmaterials 1 führt. Somit lässt sich mittels des ersten Tänzers 9a die Bahnspannung des Bahnmaterials 1 vor dem Drucktisch 3 einstellen.

Ein zweiter Tänzer 9b ist entlang des Bahnwegs des Bahnmaterials 1 hinter dem Drucktisch angeordnet. Auch der zweite Tänzer 9b ist in dem gezeigten Beispiel nach oben und unten beweglich, wobei eine Bewegung des zweiten Tänzers 9b nach unten zu einer Erhöhung der Spannung des Bahnmaterials 1 führt und eine Bewegung des zweiten Tänzers 9b nach oben zu einer Verringerung der Spannung des Bahnmaterials 1 führt. Somit lässt sich mittels des zweiten Tänzers 9b die Bahnspannung des Bahnmaterials 1 hinter dem Drucktisch 3 einstellen, welche zumindest während des Haltens des Bahnmaterials 1 mittels der Halteeinrichtung an dem Drucktisch 3 von der Bahnspannung vor dem Drucktisch 3 unabhängig ist.

Eine Steuervorrichtung 10 ist mit den Bahnspannungsmessrollen 7a, 7b und den Tänzern 9a, 9b verbunden (nicht gezeigt) und eingerichtet, die ersten und die zweiten Messdaten von den Bahnspannungsmessrollen 7a, 7b zu empfangen. In der Steuervorrichtung 10 werden die ersten Messdaten mit einer ersten vorgegebenen Bahnspannung verglichen. Die erste vorgegeben Bahnspannung gibt eine gewünschte Bahnspannung des Bahnmaterials 1 entlang des Bahnwegs des Bahnmaterials 1 vor dem Drucktisch an. Die Steuervorrichtung 10 erzeugt dem Vergleichsergebnis entsprechende erste Steuerdaten, die an den ersten Tänzer 9a übertragen werden und zu einer Bewegung des ersten Tänzers 9a führen. Beispielsweise geben die ersten Steuerdaten eine kleine Bewegung des ersten Tänzers 9a nach unten an, wenn der Vergleich ergibt, dass die Bahnspannung des Bahnmaterials an der ersten Bahnspannungsmessrolle 7a um eine kleine Differenz nach unten von der ersten vorgegebenen Bahnspannung abweicht und die ersten Steuerdaten geben eine größere Bewegung des ersten Tänzers 9a nach oben an, wenn der Vergleich ergibt, dass die Bahnspannung des Bahnmaterials an der ersten Bahnspannungsmessrolle 7a um eine größere Differenz nach oben von der ersten vorgegebenen Bahnspannung abweicht.

Die Steuervorrichtung 10 ist weiter eingerichtet, die zweiten Messdaten mit einer zweiten vorgegebenen Bahnspannung zu vergleichen. Die zweite vorgegeben Bahnspannung gibt eine gewünschte Bahnspannung des Bahnmaterials 1 entlang des Bahnwegs des Bahnmaterials 1 hinter dem Drucktisch an. Die Steuervorrichtung 10 erzeugt dem Vergleichsergebnis entsprechende zweite Steuerdaten, die an den zweiten Tänzer 9b übertragen werden und zu einer Bewegung des zweiten Tänzers 9b führen. Wie oben bezüglich des ersten Tänzers 9a erläutert, geben beispielsweise die zweiten Steuerdaten eine kleine Bewegung des zweiten Tänzers 9b nach unten an, wenn der Vergleich ergibt, dass die Bahnspannung des Bahnmaterials an der zweiten Bahnspannungsmessrolle 7b um eine kleine Differenz nach unten von der zweiten vorgegebenen Bahnspannung abweicht und die zweiten Steuerdaten geben eine größere Bewegung des zweiten Tänzers 9b nach oben an, wenn der Vergleich ergibt, dass die Bahnspannung des Bahnmaterials an der zweiten Bahnspannungsmessrolle 7b um eine größere Differenz nach oben von der zweiten vorgegebenen Bahnspannung abweicht.

Es kann eine kontinuierliche Überwachung der Bahnspannungen vor und hinter dem Drucktisch 3 erfolgen, indem wiederholt erste und zweite Messdaten empfangen und entsprechende erste und zweite Steuerdaten erzeugt werden. Hierdurch kann eine Regelung der Bahnspannung in der Druckvorrichtung, entlang des Bahnwegs des Bahnmaterials 1 sowohl vor als auch hinter dem Drucktisch 3, bereitgestellt sein. Beispielsweise können die erste und die zweite vorgegebene Bahnspannung gleich sein und die Bahnspannung des Bahnmaterials 1 sowohl vor als auch hinter dem Drucktisch 3 derart geregelt sein, dass vor und hinter dem Drucktisch 3 die gleiche Bahnspannung des Bahnmaterials 1 innerhalb einer vorgegeben zulässigen Abweichung erreicht wird.

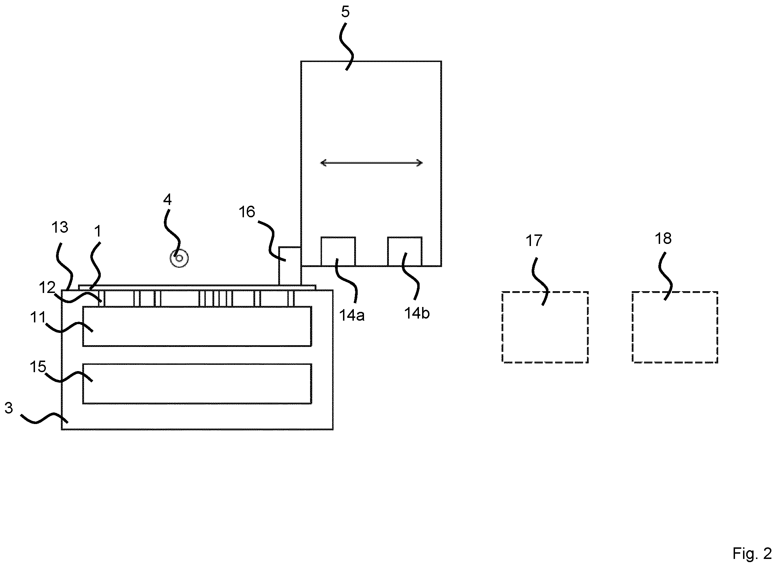

Die Fig. 2 zeigt eine Anordnung eines Drucktischs 3 in einer Druckvorrichtung, auf dem ein Bahnmaterial 1 angeordnet ist. Das Bahnmaterial 1 wird während einer Bewegung des Drucktischs 3 in eine Vorschubrichtung 4 (aus der Zeichnungsebene der Fig. 2 heraus) mittels einer Halteeinrichtung an dem Drucktisch 3 gehalten, so dass das Bahnmaterial 1 entlang der Vorschubrichtung 4 durch die Druckvorrichtung bewegt wird. In der Darstellung der Fig. 2 ist die Haltevorrichtung mit einer Vakuumvorrichtung 11 bereitgestellt. Die Vakuumvorrichtung 11 erzeugt einen Unterdruck. Hierbei ist die Vakuumvorrichtung 11 über Kanäle 12 zu einer Auflagefläche 13 des Drucktischs 3 mit der Umgebung verbunden. Das Bahnmaterial 1 liegt auf der Auflagefläche 13 des Drucktischs 3 auf. Zum Halten des Bahnmaterials 1 erzeugt die Vakuumvorrichtung 11 während der Bewegung des Drucktischs 3 in die Vorschubrichtung 4 einen Unterdruck, so dass das Bahnmaterial über die Kanäle 12 an die Auflagefläche 13 angesaugt und so an dem Drucktisch 3 gehalten wird.

Um ein gleichmäßiges Halten des Bahnmaterials 1 auf der Auflagefläche 13 zu gewährleisten, sind Öffnungen der Kanäle 12 über die gesamte Auflagefläche 13 verteilt. In dem Beispiel der Fig. 2 besteht die Auflagefläche 13 hierzu aus einem porösen Material mit einer definierten Porosität, welches mit der Vakuumvorrichtung 11 verbunden ist. Durch die Porosität des Materials der Auflagefläche 13 sind undefinierte Kanäle 12 bereitgestellt, welche aufgrund der definierten Porosität zu einem gleichmäßigen Ansaugen und Halten des Bahnmaterials 1 an der Auflagefläche 13 führen. In alternativen Ausgestaltungen können die Kanäle 12 beispielsweise mit einem definierten Raster von Bohrungen, beispielsweise Mikrobohrungen, bereitgestellt sein, um ein gleichmäßiges Ansaugen und Halten des Bahnmaterials 1 an der Auflagefläche 13 zu gewährleisten. Abgesehen von den Öffnungen der Kanäle 12 in der Auflagefläche 13 bzw. der Porosität des Materials ist die Auflagefläche 13 des Drucktisches 3 als zusammenhängende Fläche ausgebildet. Unterbrechungen in der Auflagefläche 13 können vorgesehen sein. Es ist jedoch vorteilhaft, wenn der Drucktisch 13 eine Einheit bildet und somit auch die Auflagefläche 13 als eine zusammenhängende Einheit bewegt wird.

Als weitere Alternative kann die Haltevorrichtung nicht als eine Vakuumvorrichtung 11 bereitgestellt sein. Beispielsweise kann die Haltevorrichtung mittels eines oder mehrerer Greifer bereitgestellt sein, welche das Bahnmaterial 1 greifen und auf der Auflagefläche 13 des Drucktischs 3 halten.

Während der Bewegung des Bahnmaterials 1 auf dem Drucktisch 3 an dem Druckkopfshuttle 5 vorbei, bedruckt das Druckkopfshuttle 5 das Bahnmaterial 1 mit einem Druckmittel. Hierzu weist das Druckkopfshuttle einen oder mehrere Druckköpfe 14 auf. In der Darstellung der Fig. 2 weist das Druckkopfshuttle 5 zwei Druckköpfe 14a, 14b auf. Ein Druckkopf 14 kann eine Düse oder eine Düsenreihe mit mehreren aneinander gereihten Düsen umfassen. Durch die Düsen ist das Druckmittel tröpfchenweise ausstoßbar. Beispielsweise kann je ein Druckkopf 14 pro gewünschter Farbe bzw. aufzubringendem Material verwendet werden.

Die Druckköpfe 14 werden selektiv angesteuert, um selektiv Druckmittel auf das Bahnmaterial 1 aufzubringen und so ein gewünschtes Druckbild auf dem Bahnmaterial zu erzeugen. Hierbei bewegt sich das Druckkopfshuttle 5 quer zur Vorschubrichtung 4 des Bahnmaterials 1 vor und zurück, so dass sich die Druckköpfe 14 über das Bahnmaterial 1 bewegen. Es sind somit durch die Bewegung des Drucktischs 3 entlang der Vorschubrichtung 4 eine Relativbewegung des Bahnmaterials 1 zu den Druckköpfen 14 in einer ersten Druckrichtung und durch die Bewegung des Druckkopfshuttles 5 quer zu der Vorschubrichtung 4 eine Relativbewegung des Bahnmaterials 1 zu den Druckköpfen 14 in einer zweiten Druckrichtung bereitgestellt, die quer zu der ersten Druckrichtung verläuft. Durch eine selektive Steuerung der Bewegung des Drucktischs 3, der Bewegung des Druckkopfshuttles 5 sowie dem Ausstoß der Druckmittels aus den Druckköpfen 14 wird somit ein gewünschtes Druckbild auf das Bahnmaterial 1 aufgebracht.

In Abhängigkeit von dem verwendeten Bahnmaterial 1 und dem verwendeten Druckmittel kann es vorteilhaft sein, das Bahnmaterial 1 zum Bedrucken auf eine bestimmte Temperatur zu bringen. Hierzu weist der Drucktisch 3 gemäß der Fig. 2 eine Heizeinrichtung 15 auf. Mittels der Heizeinrichtung 15 wird die Auflagefläche 13 des Drucktischs 3 auf eine vorbestimmte Temperatur gebracht. Hierdurch wird das auf der Auflagefläche 13 angeordnete Bahnmaterial 1 zum Bedrucken auf eine Drucktemperatur erwärmt.

Das Druckkopfshuttle 5 weist weiter eine Glättvorrichtung auf. In den Darstellungen der Figuren 1 und 2 ist die Glättvorrichtung eine Bürste 16, welche sich entlang einer Längsrichtung erstreckt, welche parallel zu der Vorschubrichtung 4 verläuft. Die Bürste 16 als funktionaler Teil der Glättvorrichtung ist somit in Längsrichtung, parallel zur Vorschubrichtung, langgestreckt. Sie weist also in der Längsrichtung eine größere Erstreckung als in andere Richtungen auf. So kann die Glättvorrichtung bei einer Bewegung über das Bahnmaterial 1 quer zur Vorschubrichtung 4 glättend wirken. Die Bürste 16 ist, wie in der Fig. 2 dargestellt, bezogen auf die Bewegungsrichtung des Druckkopfshuttles 5 seitlich an dem Druckkopfshuttle 5 angeordnet. Die Bürste 16 ist relativ zu dem Druckkopfshuttle 5 nach oben und unten zwischen einer ersten und einer zweiten Stellung beweglich. In der ersten Stellung tritt die Bürste 16 mit der Auflagefläche 13 in Kontakt, so dass die Bürste 16 bei einer Bewegung des Drucckopfshuttles 5 quer zur Vorschubrichtung 4 über das auf der Auflagefläche 13 des Drucktischs 3 angeordnete Bahnmaterial 1 streicht. In der zweiten Stellung ist die Bürste 16 so über dem Drucktisch 3 angeordnet, dass die Bürste 16 bei einer Bewegung des Druckkopfshuttles 5 weder den Drucktisch 3 noch das Bahnmaterial 1 berührt.

Bei einem Druckvorgang wird, während sich der Drucktisch 3 in der hinteren Stellung befindet, mittels der Vakuumvorrichtung 11 eine Verbindung zwischen dem Bahnmaterial 1 und der Auflagefläche 13 ausgebildet. Die gemäß der Fig. 2 auf der linken Seite des Druckkopfshuttles 5 angeordnete Bürste 16 wird, während sich das Druckkopfshuttle 5 in einer ersten Stellung befindet, in der das Druckkopfshuttle 5 und die Bürste 16 rechts von dem Drucktisch 3 angeordnet sind, in die erste Stellung gebracht. Bei einer anschließenden ersten Bewegung des Druckkopfshuttles 5 über den Drucktisch 3 und das Bahnmaterial 1 streicht die Bürste 16 über das Bahnmaterial 1 und glättet damit Falten und / oder Blasen, die in dem Bahnmaterial 1 während des Ausbildens des Kontakts zwischen der Auflagefläche 13 und dem Bahnmaterial 1 und / oder während des Aufheizens des Bahnmaterials 1 mittels der Heizeinrichtung 15 entstanden sein können.

Nachdem die Bürste 16 über die gesamte Breite des Bahnmaterials 1 bewegt wurde, wird die Bürste 16 in die zweite Stellung gebracht. Bei anschließenden Bewegungen des Drucckopfshuttles 5, während der Bewegung des Drucktischs 3 von der hinteren in die vordere Stellung, tritt die Bürste 16 somit nicht in Kontakt mit dem Bahnmaterial 1. Nach dem Lösen des Bahnmaterials 1 von dem Drucktisch 3 und der Bewegung des Drucktischs 3 von der vorderen in die hintere Stellung wird erneut eine Verbindung zwischen dem Bahnmaterial 1 und der Auflagefläche 13 ausgebildet und die Bürste 16 in die erste Stellung bewegt. Somit wird das Bahnmaterial nach jedem Ausbilden eines Kontakts mit der Auflagefläche 13 des Drucktischs 3 während der ersten anschließenden Bewegung des Druckkopfshuttles 5 über das Bahnmaterial 1 durch die Bürste 16 geglättet.

Die Bürste 16 weist eine Länge auf, welche mindestens der Länge der Auflagefläche 13 des Drucktischs 3 entspricht. Hierbei kann, wie in der Fig. 1 erkennbar, die Länge der Bürste 16 größer sein als eine Länge des Druckkopfshuttles 5, welche kürzer sein kann als die Länge der Auflagefläche 13. Somit ist sichergestellt, dass das Bahnmaterial 1 durch die Bürste 16 auf der gesamten Länge geglättet wird, auf der ein Kontakt zu der Auflagefläche 13 des Drucktischs hergestellt ist.

Optional kann eine Capping-Station 17 vorgesehen sein, welche ein Austrocknen der Druccköpfe 14 verhindert. Bei Nichtbenutzung der Druckvorrichtung wird das Druckkopfshuttle 5 in eine Stellung gefahren, in der die Druckköpfe 14 durch die Capping-Station 17 von der Umgebung abgeschirmt sind und somit ein Austrocknen der Druckköpfe 14 durch Verdampfen von Lösungsmittel des Druckmittels verhindert ist. Weiterhin kann optional ein Druckmittelbehälter 18 für das Reinigen und / oder Vorbereiten der Druckköpfe 14 für einen Druckvorgang vorgesehen sein. Das Druckkopfshuttle kann in eine Stellung bewegt werden, in der sich die Druckköpfe 14 über dem Druckmittelbehälter 18 befinden. Anschließend kann aus den Druckköpfen 14 Druckmittel in die Druckmittelbehälter 18 ausgestoßen werden, um die die Druckköpfe 14 von Verunreinigungen und / oder Druckmittelresten zu befreien und / oder um Luft aus Transportwegen des Druckmittels in den Druckköpfen 14 entfernen.

Wie in der Fig. 1 dargestellt sind entlang des Bahnwegs des Bahnmaterials 1 hinter dem Drucktisch 3 und im Bereich der zweiten Bahnspannungsmessrolle 7b und des zweiten Tänzers 9b Trocknungseinrichtungen 19a, 19b angeordnet. Mittels der Trocknungseinrichtungen 19a, 19b wird das Druckmittel auf dem Bahnmaterial 1 getrocknet. Beispielsweise kann es sich bei den Trocknungseinrichtungen 19a, 19b um Heißluftgebläse und / oder UV-Strahler handeln. Es können unterschiedliche Trocknungseinrichtungen 19a, 19b vorgesehen sein.

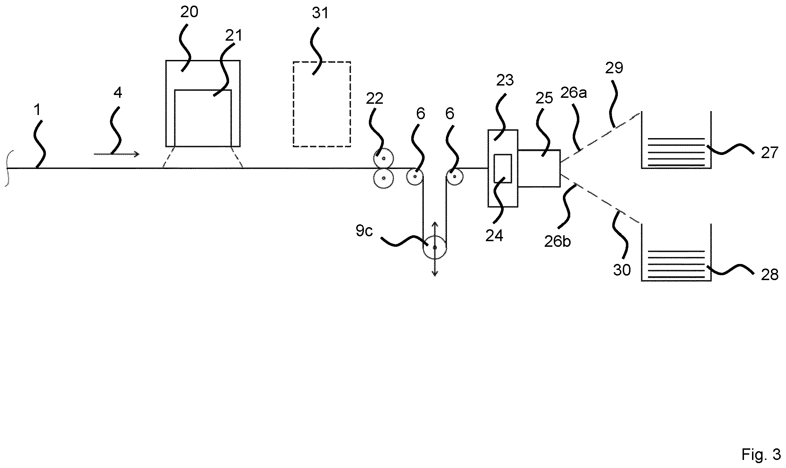

Die Fig. 3 zeigt weitere Ausgestaltungsoptionen einer Druckvorrichtung. Dies kann beispielsweise die Druckvorrichtung aus der Fig. 1 sein. Alternativ können die Ausgestaltungsoptionen gemäß der Fig. 3 in einer anderen Druckvorrichtung als der Druckvorrichtung gemäß der Fig. 1 vorgesehen sein. Entlang der Bewegungsbahn des Bahnmaterials 1 hinter dem zweiten Tänzer 9b und den Trocknungseinrichtungen 19a, 19b ist eine Druckbild-Prüfvorrichtung 20 angeordnet. Die Druckbild-Prüfvorrichtung 20 weist eine Bildaufnahmevorrichtung 21 auf, die eingerichtet ist ein Bild des Druckbilds auf dem Bahnmaterial 1 aufzunehmen. In der Druckbild-Prüfvorrichtung 20 wird das aufgenommene Bild des Druckbilds auf dem Bahnmaterial 1 mit Vergleichs-Bilddaten verglichen, welche beispielsweise Druckauftrag-Daten eines Druckauftrags zum Drucken des Druckbilds sein können. Wenn anhand des Vergleichs des Druckbilds auf dem Bahnmaterial 1 mit den Vergleichs-Bilddaten eine Übereinstimmung zwischen dem Druckbild und den Vergleichs-Bilddaten festgestellt wird, wird das Druckbild als ein korrektes Druckbild bestimmt. Wenn anhand des Vergleichs des Druckbilds auf dem Bahnmaterial 1 mit den Vergleichs-Bilddaten keine Übereinstimmung zwischen dem Druckbild und den Vergleichs-Bilddaten festgestellt wird, wird das Druckbild als ein nicht-korrektes Druckbild bestimmt.

Eine Übereinstimmung zwischen dem Druckbild und den Vergleichs-Bilddaten wird festgestellt, wenn das aufgenommene Bild des Druckbilds auf dem Bahnmaterial 1 den Vergleichs-Bilddaten innerhalb vorbestimmter Grenzen entspricht. Entspricht das aufgenommene Bild des Druckbilds auf dem Bahnmaterial 1 den Vergleichs-Bilddaten nicht innerhalb der vorbestimmten Grenzen, wird keine Übereinstimmung zwischen dem Druckbild und den Vergleichs-Bilddaten festgestellt. Der Vergleich des aufgenommenen Bilds mit den Vergleichs-Bilddaten kann beispielsweise ein Pixel-Vergleich und / oder ein Vergleich kennzeichnender Werte des aufgenommenen Bilds, beispielsweise ein Kontrastwert, sein.

Zur Unterstützung der Fortbewegung des Bahnmaterials 1 ist entlang der Bewegungsbahn des Bahnmaterials 1 hinter der Prüfvorrichtung 21 ein Rollenantrieb 22 angeordnet. Hinter dem Rollenantrieb 22 ist ein weiterer Tänzer 9c zur Steuerung der Bahnspannung des Bahnmaterials 1 angeordnet. Der weitere Tänzer 9c kann beispielsweise von der Steuervorrichtung 10 entsprechend den zweiten Sensordaten angesteuert werden. Alternativ kann eine weitere Bahnspannungsmessrolle vorgesehen sein, welche dritte Messdaten erzeugt, mittels derer die Steuervorrichtung 10 den weiteren Tänzer 9c ansteuert.

Entlang der Bewegungsbahn des Bahnmaterials 1 hinter der Prüfvorrichtung 21 und dem weiteren Tänzer 9c ist eine Konfektioniereinrichtung 23 angeordnet, die eingerichtet ist, das Bahnmaterial 1 zu einzelnen Bögen zu konfektionieren. Beispielsweise kann das Bahnmaterial 1 der Konfektioniereinrichtung 23 zugeführt werden und mittels einer Schneideinrichtung 24 der Konfektioniereinrichtung 23 auf eine vorbestimmte Bogengröße zugeschnitten werden, um das Bahnmaterial 1 zu einzelnen Bögen zu konfektionieren. Anschließend werden die einzelnen Bögen in einer Dokumentenweiche 25 auf unterschiedliche Transportwege 26a, 26b gelenkt. Ein Transportweg 26a führt in einen Dokumentenbehälter 27. Ein weiterer Transportweg 26b führt in einen Ausschussbehälter 28. Bögen, die ein Druckbild tragen, welches als korrektes Druckbild bestimmt wurde, werden als Dokumentenbogen 29 bestimmt und von der Dokumentenweiche 25 auf den Transportweg 26a geleitet, der in den Dokumentenbehälter 27 führt. Bögen, die ein Druckbild tragen, welches als nicht-korrektes Druckbild bestimmt wurde, werden als Makulatur-Bogen 30 bestimmt und von der Dokumentenweiche 25 auf den Transportweg 26b geleitet, der in den Ausschussbehälter 28 führt. Auf diese Weise kann eine Aussortierung von Druckbögen erfolgen, welche Fehler im Druckbild aufweisen. Es kann anschließend ein erneuter Druck des Druckbilds eines Makulatur-Bogens 30 erfolgen.

Optional kann eine Schlechtmarkierungs-Vorrichtung 31 vorgesehen sein, welche entlang der Bewegungsbahn des Bahnmaterials 1 hinter der Prüfvorrichtung 21 und vor der Konfektioniereinrichtung 23 angeordnet ist. Die Schlechtmarkierungs-Vorrichtung 31 ist eingerichtet, auf ein Druckbild, welches als nicht-korrektes Druckbild bestimmt wurde, mit einer Markierung zu versehen, welche das Druckbild als nicht-korrektes Druckbild kennzeichnet. Beispielsweise kann die Schlechtmarkierungs-Vorrichtung 31 hierzu einen Druckkopf umfassen.

Es kann vorgesehen sein, dass das Druckbild mehrere Einzel-Druckbilder umfasst. In diesem Fall kann jedes Einzel-Druckbild als korrektes Einzel-Druckbild oder nicht-korrektes Einzel-Druckbild bestimmt werden und die Schlechtmarkierungs-Vorrichtung 31 kann eingerichtet sein, jedes als nicht-korrektes Einzel-Druckbild bestimmtes Einzel-Druckbild mit einer Markierung zu versehen, welche das Einzel-Druckbild als nicht-korrektes Einzel-Druckbild kennzeichnet. In diesem Fall kann die Dokumentenweiche 25 entfallen und alle vereinzelten Bögen können über den Transportweg 26a dem Dokumentenbehälter 27 zugeführt werden.

Alternativ kann die Dokumentenweiche 25 vorgesehen und eingerichtet sein, Druckbögen mit einem Druckbild, das eine Anzahl an als nicht-korrekte Einzel-Druckbilder gekennzeichneten Einzel-Druckbildern umfasst, die eine vorbestimmte Höchstzahl an nicht-korrekten Einzel-Druckbildern übersteigt, über den Transportweg 26b dem Ausschussbehälter 28 zuzuführen und andere Bögen über den Transportweg 26a dem Dokumentenbehälter 27 zuzuführen.

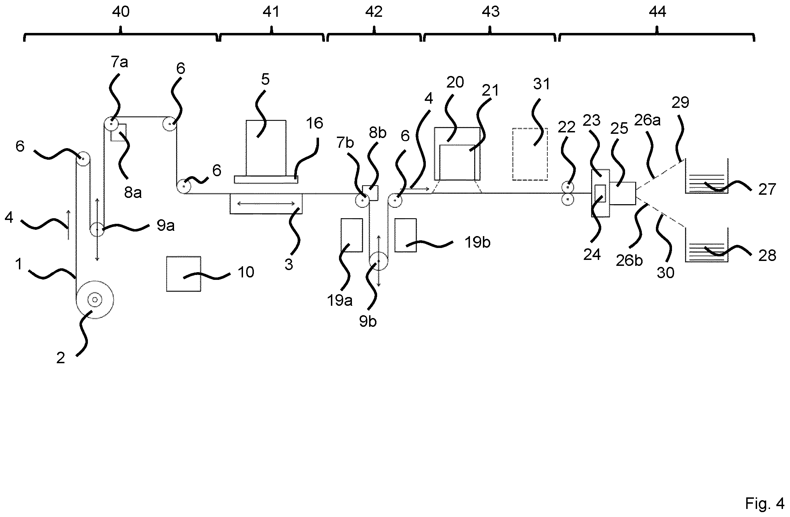

Die Fig. 4 zeigt eine weitere Druckvorrichtung zum Bedrucken eines Drucksubstrats. In der Ausgestaltung gemäß der Fig. 4 weist die Druckvorrichtung zwei Tänzer 9a, 9b, jedoch keinen dritten Tänzer, auf. In diesem Ausgestaltungsbeispiel umfasst ein Rollenabwickelmodul 40 die Rolle 2, die erste Bahnspannungsmessrolle 7a mit der Sensoreinrichtung 8a, den ersten Tänzer 9a sowie die zugehörigen Umlenkrollen 6. Gemäß der gezeigten Ausgestaltung umfasst ein Druckmodul 41 den Drucktisch 3, das Druckkopfshuttle 5 und die Bürste 16. Ein Trocknungsmodul 42 umfasst die zweite Bahnspannungsmessrolle 7b mit der Sensoreinrichtung 8b, den zweiten Tänzer 9b, die Trocknungseinrichtungen 19a, 19b sowie die zugehörigen Umlenkrollen 6. Ein Bildverabeitungsmodul 43 umfasst die Druckbild-Prüfvorrichtung mit der Bildaufnahmevorrichtung 21 und optional die Schlechtmarkierungs-Vorrichtung 31. Das Trocknungsmodul 42 und das Bildverabeitungsmodul 43 können zu einem Trocknungs- und Bildverarbeitungsmodul zusammengefasst sein. Gemäß der in der Fig. 4 gezeigten Ausgestaltung umfasst ein Konfektionierungsmodul 44 den Rollenantrieb 22, die Konfektioniereinrichtung 23 mit der Schneideinrichtung 24, die Dokumentenweiche 25, die Transportwege 26a, 26b, den Dokumentenbehälter 27 sowie den Ausschussbehälter 28.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: Bahnmaterial
- 2: Rolle
- 3: Drucktisch
- 4: Vorschubrichtung
- 5: Druckkopfshuttle
- 6: Umlenkrollen
- 7a, 7b: Bahnspannungsmessrolle
- 8a, 8b: Sensoreinrichtung
- 9a, 9b, 9c: Tänzer
- 10: Steuervorrichtung
- 11: Vakuumvorrichtung
- 12: Kanäle
- 13: Auflagefläche
- 14a, 14b: Druckköpfe
- 15: Heizeinrichtung
- 16: Bürste
- 17: Capping-Station
- 18: Druckmittelbehälter
- 19a, 19b: Trocknungseinrichtung
- 20: Prüfvorrichtung
- 21: Bildaufnahmevorrichtung
- 22: Rollenantrieb
- 23: Konfektioniereinrichtung
- 24: Schneideinrichtung
- 25: Dokumentenweiche
- 26a, 26b: Transportwege
- 27: Dokumentenbehälter
- 28: Ausschussbehälter
- 29: Dokumentenbogen
- 30: Makulatur-Bogen
- 31: Schlechtmarkierungs-Vorrichtung
- 40: Rollenabwickelmodul
- 41: Druckmodul
- 42: Trocknungsmodul
- 43: Bildverabeitungsmodul
- 44: Konfektionierungsmodul

## Patentansprüche

1. Vorrichtung zum Bedrucken eines Drucksubstrats (1), mit
- einem Druckkopfshuttle (5) mit wenigstens einem Druckkopf (14a, 14b), der eingerichtet ist, zum Erzeugen eines Druckbildes ein Druckmittel auf ein Drucksubstrat (1) aufzubringen, wobei das Drucksubstrat (1) ein Bahnmaterial (1) ist, welches entlang eines Bahnwegs verlagerbar ist, und das Druckkopfshuttle (5) auf einer ersten Seite des Drucksubstrats (1) angeordnet ist; und
- einem Drucktisch (3), der dem Druckkopfshuttle (5) gegenüber auf einer zweiten Seite des Drucksubstrats (1) angeordnet ist,
wobei
- der Drucktisch (3) eine Halteeinrichtung (11) umfasst, die eingerichtet ist, das Drucksubstrat (1) zu halten, derart, dass zum Bedrucken eine Relativbewegung zwischen dem Drucktisch (3) und dem Drucksubstrat (1) verhindert ist;
- der Drucktisch (3) eingerichtet ist, eine Vorschubbewegung auszuführen, während die Halteeinrichtung (11) das Drucksubstrat (1) hält, derart, dass die Vorschubbewegung auf das Drucksubstrat (1) übertragen wird und der Drucktisch (3) eine Vorschubbewegung des Drucksubstrats (1) entlang des Bahnwegs bewirkt;
- der Drucktisch (3) eingerichtet ist, das Drucksubstrat (1) in einer Vorschubrichtung an dem Druckkopfshuttle (5) vorbeizubewegen, wobei das Druckkopfshuttle (5) eingerichtet ist, das Drucksubstrat (1) während der Bewegung des Drucksubstrats (1) zu bedrucken; und
- die Halteeinrichtung (11) eine Vakuumeinrichtung mit Kanälen umfasst, über welche sie mit einer Auflagefläche des Drucktischs (3) verbunden ist, sodass das Drucksubstrat (1) mittels eines Unterdrucks an die Auflagefläche des Drucktischs (3) ansaugbar ist, um das Drucksubstrat (1) zu halten,
**dadurch gekennzeichnet, dass** zumindest ein Abschnitt des Drucktischs (3), welcher die Auflagefläche umfasst, ein poröses Material umfasst, wobei die Kanäle, welche die Vakuumvorrichtung mit der Auflagefläche verbinden, durch die Porosität des Materials bereitgestellt sind.

2. Vorrichtung nach Anspruch 1, **dadurch gekennzeichnet, dass** die Halteeinrichtung (11) eingerichtet ist, das Drucksubstrat (1) während der Vorschubbewegung des Drucksubstrats (1) zu halten, derart, dass eine Relativbewegung zwischen dem Drucktisch (3) und dem Drucksubstrat (1) während der Vorschubbewegung verhindert ist.

3. Vorrichtung nach mindestens einem der vorangehenden Ansprüche, **dadurch gekennzeichnet, dass** der Drucktisch (3) eingerichtet ist, das Bahnmaterial (1) entlang des Bahnwegs in der Vorschubrichtung (4) zu bewegen, wobei der Drucktisch (3) in die Vorschubrichtung (4) sowie entgegen der Vorschubrichtung (4) beweglich ist.

4. Vorrichtung nach mindestens einem der vorangehenden Ansprüche, **dadurch gekennzeichnet, dass** die Porosität des Materials eine definierte Porosität ist.

5. Vorrichtung nach mindestens einem der vorangehenden Ansprüche, **dadurch gekennzeichnet, dass** die Halteeinrichtung (11) eine Greifeinrichtung umfasst, welche eingerichtet ist, das Drucksubstrat (1) zu greifen, um es zu halten.

6. Vorrichtung nach mindestens einem der vorangehenden Ansprüche, **dadurch gekennzeichnet, dass** das Bahnmaterial (1) ein Folienmaterial ist.

7. Vorrichtung nach mindestens einem der vorangehenden Ansprüche, **gekennzeichnet, durch**
- eine erste Bahnspannungsmesseinrichtung (7a, 8a), welche entlang des Bahnwegs vor dem Drucktisch (3) angeordnet und eingerichtet ist, erste Messdaten zu erzeugen, welche eine mechanische Bahnspannung des Drucksubstrats (1) an der ersten Bahnspannungsmesseinrichtung (7a, 8a) angeben;
- eine erste Spannvorrichtung (9a), welche entlang des Bahnwegs vor dem Drucktisch (3) angeordnet und eingerichtet ist, eine mechanische Bahnspannung des Drucksubstrats (1) einzustellen;
- eine zweite Bahnspannungsmesseinrichtung (7b, 8b), welche entlang des Bahnwegs nach dem Drucktisch (3) angeordnet und eingerichtet ist, zweite Messdaten zu erzeugen, welche eine mechanische Bahnspannung des Drucksubstrats (1) an der zweiten Bahnspannungsmesseinrichtung (7b, 8b) angeben;
- eine zweite Spannvorrichtung (9b), welche entlang des Bahnwegs nach dem Drucktisch (3) angeordnet und eingerichtet ist, eine mechanische Bahnspannung des Drucksubstrats (1) einzustellen; und
- eine Steuervorrichtung (10), die eingerichtet ist,
- die ersten Messdaten zu empfangen, anhand der ersten Messdaten erste Steuerdaten zu erzeugen und die erste Spannvorrichtung (9a) entsprechend den ersten Steuerdaten anzusteuern, derart, dass die erste Spannvorrichtung (9a) eine erste vorgegebene Bahnspannung des Drucksubstrats (1) an der ersten Spannvorrichtung (9a) bewirkt; und
- die zweiten Messdaten zu empfangen, anhand der zweiten Messdaten zweite Steuerdaten zu erzeugen und die zweite Spannvorrichtung (9b) entsprechend den zweiten Steuerdaten anzusteuern, derart, dass die zweite Spannvorrichtung (9b) eine zweite vorgegebene Bahnspannung des Drucksubstrats (1) an der zweiten Spannvorrichtung (9b) bewirkt,
wobei die Steuervorrichtung (10) vorzugsweise weiter eingerichtet ist, während eines Druckvorgangs die Bahnspannung des Drucksubstrats (1) entlang des Bahnwegs vor dem Drucktisch (3) konstant zu halten und die Bahnspannung des Drucksubstrats (1) entlang des Bahnwegs hinter dem Drucktisch (3) konstant zu halten.

8. Vorrichtung nach mindestens einem der vorangehenden Ansprüche, **gekennzeichnet durch** eine Aussonderungseinrichtung, umfassend:
- eine Prüfvorrichtung (20) mit einer Bildaufnahmeeinrichtung (21), die eingerichtet ist,
- ein Bild des Druckbilds auf dem Bahnmaterial (1) aufzunehmen,
- das aufgenommene Bild des Druckbilds auf dem Bahnmaterial (1) mit Vergleichs-Bilddaten zu vergleichen,
- das Druckbild als ein korrektes Druckbild zu bestimmen, wenn anhand des Vergleichs des Druckbilds auf dem Bahnmaterial (1) mit den Vergleichs-Bilddaten eine Übereinstimmung zwischen dem Druckbild und den Vergleichs-Bilddaten festgestellt wird, und
- das Druckbild als ein nicht-korrektes Druckbild zu bestimmen, wenn anhand des Vergleichs des Druckbilds auf dem Bahnmaterial (1) mit den Vergleichs-Bilddaten keine Übereinstimmung zwischen dem Druckbild und den Vergleichs-Bilddaten festgestellt wird;
- eine Konfektioniereinrichtung (23), die eingerichtet ist, das Bahnmaterial (1) zu einzelnen Bögen zu konfektionieren; und
- eine Dokumentenweiche (25), die eingerichtet ist, einen konfektionierten Bogen auf einen von einem ersten Transportweg (26a) und einem zweiten Transportweg (26b) zu leiten, wobei
- ein konfektionierter Bogen mit einem Druckbild, welches als ein korrektes Druckbild bestimmt wurde, auf den ersten Transportweg (26a) geleitet wird und
- ein konfektionierter Bogen mit einem Druckbild, welches als ein nicht-korrektes Druckbild bestimmt wurde, auf den zweiten Transportweg (26b) geleitet wird.

9. Verfahren zum Bedrucken eines Drucksubstrats (1), umfassend:
- Aufbringen eines Druckmittels auf ein Drucksubstrat (1), welches ein Bahnmaterial (1) ist, welches entlang eines Bahnwegs verlagerbar ist, mittels wenigstens eines Druckkopfs (14a, 14b) eines Druckkopfshuttles (5), welches auf einer ersten Seite des Drucksubstrats (1) angeordnet ist, zum Erzeugen eines Druckbildes;
- Halten des Drucksubstrats (1) mittels einer Halteeinrichtung (11) eines Drucktischs (3), der dem Druckkopfshuttle (5) gegenüber auf einer zweiten Seite des Drucksubstrats (1) angeordnet ist, derart, dass zum Bedrucken eine Relativbewegung zwischen dem Drucktisch (3) und dem Drucksubstrat (1) verhindert wird, wobei eine von der Halteeinrichtung (11) umfasste Vakuumeinrichtung mit Kanälen über diese mit einer Auflagefläche des Drucktisches (3) verbunden ist und das Drucksubstrat (1) mittels eines Unterdrucks an die Auflagefläche des Drucktisches (3) ansaugt und hält; und
- Verlagern des Drucksubstrats (1) entlang des Bahnwegs, wobei der Drucktisch (3) eine Vorschubbewegung ausführt, während die Halteeinrichtung (11) das Drucksubstrat (1) hält, derart, dass die Vorschubbewegung auf das Drucksubstrat (1) übertragen wird und der Drucktisch (3) eine Vorschubbewegung des Drucksubstrats (1) entlang des Bahnwegs bewirkt, wobei der Drucktisch (3) das Drucksubstrat (1) in einer Vorschubrichtung an dem Druckkopfshuttle (5) vorbeibewegt, und während der Bewegung des Drucksubstrats (1) das Druckkopfshuttle (5) das Drucksubstrat (1) bedruckt,
**dadurch gekennzeichnet, dass** zumindest ein Abschnitt des Drucktischs (3), welcher die Auflagefläche umfasst, ein poröses Material umfasst, wobei die Kanäle, welche die Vakuumvorrichtung mit der Auflagefläche verbinden, durch die Porosität des Materials bereitgestellt sind.

10. Verfahren nach Anspruch 9, **dadurch gekennzeichnet, dass** das Drucksubstrat (1) während der Vorschubbewegung des Drucksubstrats (1) derart gehalten wird, dass eine Relativbewegung zwischen dem Drucktisch (3) und dem Drucksubstrat (1) während der Vorschubbewegung verhindert wird.

11. Verfahren nach Anspruch 9 oder 10, **dadurch gekennzeichnet, dass** das Bahnmaterial (1) mittels des Drucktischs (3) entlang des Bahnwegs in der Vorschubrichtung (4) bewegt wird, wobei der Drucktisch (3) dazu in die Vorschubrichtung (4) sowie entgegen der Vorschubrichtung (4) beweglich ist,
wobei sich der Drucktisch (3) in die Vorschubrichtung (4) von einer hinteren Stellung in eine vordere Stellung bewegt, während das Bahnmaterial (1) mittels der Halteeinrichtung (11) an dem Drucktisch (3) gehalten wird, und so das Bahnmaterial (1) in Vorschubrichtung (4) zieht, und
wobei anschließend die Halteeinrichtung (11) das Bahnmaterial (1) freigibt, so dass dieses von dem Drucktisch (3) gelöst ist, wobei sich der Drucktisch (3) dann entgegen der Vorschubrichtung (4) an dem Bahnmaterial (1) vorbei von der vorderen in die hintere Stellung bewegt.

## Claims

1. A device for printing a print substrate (1), comprising:
- a print head shuttle (5) having at least one print head (14a, 14b) which is configured to apply a printing medium onto a print substrate (1), in order to create a printed image, wherein the print substrate (1) is a web material (1) which can be displaced along a web path, and the print head shuttle (5) is arranged on a first side of the print substrate (1); and
- a print table (3) which is arranged opposite the print head shuttle (5) on a second side of the print substrate (1),
wherein:
- the print table (3) comprises a holding device (11) which is configured to hold the print substrate (1) in such a manner that a relative movement between the print table (3) and the print substrate (1) is prevented for printing;
- the print table (3) is configured to perform a feed movement, while the holding device (11) holds the print substrate (1) in such a manner that the feed movement is transferred to the print substrate (1) and the print table (3) causes a feed movement of the print substrate (1) along the web path;
- the print table (3) is configured to move the print substrate (1) past the print head shuttle (5) in a feed direction, wherein the print head shuttle (5) is configured to print the print substrate (1) during the movement of said print substrate (1); and
- the holding device (11) comprises a vacuum device with channels, via which it is connected to a bearing surface of the print table (3), so that the print substrate (1) can be drawn against the bearing surface of the print table (3) through suction by means of a vacuum, in order to hold said print substrate (1),
**characterized in that** at least a portion of the print table (3) which comprises the bearing surface comprises a porous material, wherein the channels connecting the vacuum device to the bearing surface are provided by the porosity of the material.

2. The device according to claim 1, **characterized in that** the holding device (11) is configured to hold the print substrate (1) during the feed movement of the print substrate (1) in such a manner that a relative movement between the print table (3) and the print substrate (1) during the feed movement is prevented.

3. The device according to at least one of the preceding claims, **characterized in that** the print table (3) is configured to move the web material (1) along the web path in the feed direction (4), wherein the print table (3) is movable in the feed direction (4) and also in the direction opposite the feed direction (4).

4. The device according to at least one of the preceding claims, **characterized in that** the porosity of the material is a defined porosity.

5. The device according to at least one of the preceding claims, **characterized in that** the holding device (11) comprises a gripping device which is configured to grip the print substrate (1), in order to hold it.

6. The device according to at least one of the preceding claims, **characterized in that** the web material (1) is a film material.

7. The device according to at least one of the preceding claims, **characterized by**:
- a first web tension measuring device (7a, 8a) which is arranged along the web path upstream of the print table (3) and is configured to generate first measurement data indicating a mechanical web tension of the print substrate (1) at the first web tension measuring device (7a, 8a);
- a first tensioning device (9a) which is arranged along the web path upstream of the print table (3) is and configured to adjust a mechanical web tension of the print substrate (1);
- a second web tension measuring device (7b, 8b) which is arranged along the web path downstream of the print table (3) and is configured to generate second measurement data indicating a mechanical web tension of the print substrate (1) at the second web tension measuring device (7b, 8b);
- a second tensioning device (9b) which is arranged along the web path downstream of the print table (3) and is configured to adjust a mechanical web tension of the print substrate (1); and
- a control device (10) which is configured
- to receive the first measurement data, to generate first control data based on the first measurement data and to control the first tensioning device (9a) according to the first control data, in such a manner that the first tensioning device (9a) brings about a first predetermined web tension of the print substrate (1) at the first tensioning device (9a); and
- to receive the second measurement data, to generate second control data based on the second measurement data and to control the second tensioning device (9b) according to the second control data, in such a manner that the second tensioning device (9b) brings about a second predetermined web tension of the print substrate (1) at the second tensioning device (9b),
wherein the control device (10) is preferably further configured to keep the web tension of the print substrate (1) constant along the web path upstream of the print table (3) and to keep the web tension of the print substrate (1) constant along the web path downstream of the print table (3) during a printing operation.

8. The device according to at least one of the preceding claims, **characterized by** a segregation device comprising:
- an inspection device (20) having an image capturing device (21) which is configured
- to capture an image of the printed image on the web material (1),
- to compare the captured image of the printed image on the web material (1) with reference image data,
- to determine that the printed image is a correct printed image when a match is found between the printed image and the reference image data when comparing the printed image on the web material (1) with the reference image data, and
- to determine the printed image as an incorrect printed image when no match is found between the printed image and the reference image data when comparing the printed image on the web material (1) with the reference image data;
- a fabricating device (23) which is configured to fabricate the web material (1) into individual sheets; and
- a document diverter (25) which is configured to guide a fabricated sheet to one of a first transport path (26a) and a second transport path (26b), wherein
- a fabricated sheet with a printed image which has been determined to be a correct printed image is guided to the first transport path (26a), and
- a fabricated sheet with a printed image which has been determined to be an incorrect printed image is guided to the second transport path (26b).

9. A method for printing a print substrate (1), comprising:
- applying a printing medium to a print substrate (1) which is a web material (1) that can be displaced along a web path by means of at least one printhead (14a, 14b) of a printhead shuttle (5), which is arranged on a first side of the print substrate (1) to produce a printed image,
- holding the print substrate (1) by means of a holding device (11) of a print table (3) which is arranged opposite the printhead shuttle (5) on a second side of the print substrate (1), in such a manner that a relative movement between the print table (3) and the print substrate (1) is prevented for printing, wherein a vacuum device with channels included in the holding device (11) is connected by said channels to a bearing surface of the print table (3) and draws the print substrate (1) against the bearing surface of the print table (3) through suction by means of a vacuum and holds it, and
- displacing the print substrate (1) along the web path, wherein the print table (3) performs a feed movement while the holding device (11) holds the print substrate (1), in such a manner that the feed movement is transferred to the print substrate (1) and the print table (3) causes a feed movement of the print substrate (1) along the web path, wherein the print table (3) moves the print substrate (1) past the printhead shuttle (5) in a feed direction, and during the movement of the print substrate (1), the printhead shuttle (5) prints on the print substrate (1),
**characterized in that** at least a portion of the print table (3) which comprises the bearing surface comprises a porous material, wherein the channels connecting the vacuum device to the bearing surface are provided by the porosity of the material.

10. The method according to claim 9, **characterized in that** the print substrate (1) is held during the feed movement of the print substrate (1) in such a manner that a relative movement between the print table (3) and the print substrate (1) during the feed movement is prevented.

11. The method according to claim 9 or 10, **characterized in that** the web material (1) is moved along the web path in the feed direction (4) by means of the print table (3), wherein the print table (3) is movable in the feed direction (4) and also in the direction opposite the feed direction (4),
wherein the print table (3) moves in the feed direction (4) from a rear position into a front position, while the web material (1) is held against the print table (3) by the holding device (11), thereby pulling the web material (1) in the feed direction (4), and
wherein the holding device (11) subsequently releases the web material (1), so that it is detached from the print table (3), wherein the print table (3) then moves in the direction opposite the feed direction (4) past the web material (1) from the front position to the rear position.

## Revendications

1. Dispositif pour imprimer un substrat d'impression (1), comportant
- une navette de tête d'impression (5) comportant au moins une tête d'impression (14a, 14b), qui est configurée pour générer une image d'impression, appliquant un support d'impression sur un substrat d'impression (1), dans lequel le substrat d'impression (1) est un matériau en bande (1), qui est déplaçable le long d'une trajectoire de bande, et la navette de tête d'impression (5) est disposée sur un premier côté du substrat d'impression (1) ; et
- une table d'impression (3) opposée à la navette de tête d'impression (5) est disposée sur un deuxième côté du substrat d'impression (1),
dans lequel
- la table d'impression (3) comprend un dispositif de maintien (11) qui est configuré pour maintenir le substrat d'impression (1) de telle manière qu'un mouvement relatif entre la table d'impression (3) et le substrat d'impression (1) soit empêché pour l'impression;
- la table d'impression (3) est configurée pour effectuer un mouvement d'avance tandis que le dispositif de maintien (11) maintient le substrat d'impression (1) de telle manière que le mouvement d'avance soit transmis au substrat d'impression (1) et la table d'impression (3) effectue un mouvement d'avance du substrat d'impression (1) effectué le long de la trajectoire de bande ;
- la table d'impression (3) est configurée pour avancer le substrat d'impression (1) dans une direction d'avance pour passer devant la navette de tête d'impression (5), dans lequel la navette de tête d'impression (5) est configurée pour imprimer sur le substrat d'impression (1) pendant le déplacement du substrat d'impression (1) ; et
- le dispositif de maintien (11) comprend un dispositif à vide avec des canaux, par l'intermédiaire desquels il est relié à une surface d'appui de la table d'impression (3), de sorte que le substrat d'impression (1) puisse être aspiré au moyen d'une pression négative à la surface d'appui de la table d'impression (3) pour maintenir le substrat d'impression (1),
**caractérisé en ce qu'**au moins une partie de la table d'impression (3) qui englobe la surface d'appui comprend un matériau poreux, dans lequel les canaux, qui relient le dispositif à vide à la surface d'appui, sont fournis par la porosité du matériau.

2. Dispositif selon la revendication 1, **caractérisé en ce que** le dispositif de maintien (11) est configuré pour maintenir le substrat d'impression (1) lors du mouvement d'avance du substrat d'impression (1) de telle manière qu'un mouvement relatif entre la table d'impression (3) et le substrat d'impression (1) soit empêché pendant le mouvement d'avance.

3. Dispositif selon au moins une des revendications précédentes, **caractérisé en ce que** la table d'impression (3) est disposée pour déplacer le matériau en bande (1) le long de la trajectoire de bande dans la direction d'avance (4), dans lequel la table d'impression (3) est mobile dans la direction d'avance (4) et dans la direction inverse de la direction d'avance (4).

4. Dispositif selon au moins une des revendications précédentes, **caractérisé en ce que** la porosité du matériau est une porosité définie.

5. Dispositif selon au moins une des revendications précédentes, **caractérisé en ce que** le dispositif de maintien (11) comprend un dispositif de préhension, qui est configuré pour saisir le substrat d'impression (1) afin de le maintenir.

6. Dispositif selon au moins une des revendications précédentes, **caractérisé en ce que** le matériau de bande (1) est un matériau en feuille.

7. Dispositif selon au moins une des revendications précédentes, **caractérisé par**
- un premier dispositif de mesure de tension de bande (7a, 8a) qui est disposé le long de la trajectoire de bande devant la table d'impression (3) et configuré pour générer des premières données de mesure qui indiquent une tension de bande mécanique du substrat d'impression (1) au niveau du premier dispositif de mesure de tension de bande (7a, 8a) ;
- un premier dispositif de tension (9a), qui est disposé le long de la trajectoire de bande devant la table d'impression (3) et configuré pour régler une tension de bande mécanique du substrat d'impression (1) ;
- un deuxième dispositif de mesure de tension de bande (7b, 8b), qui est disposé le long de la trajectoire de bande après la table d'impression (3) et configuré pour générer des deuxièmes données de mesure qui indiquent une tension de bande mécanique du substrat d'impression (1) au deuxième dispositif de mesure de tension de bande (7b, 8b);
- un deuxième dispositif de tension (9b), qui est disposé le long de la trajectoire de bande après la table d'impression (3) et configuré pour régler une tension mécanique du substrat d'impression (1); et
- un dispositif de commande (10), qui est configuré pour
- recevoir les premières données de mesure, générer des premières données de commande sur la base des premières données de mesure et commander le premier dispositif de tension (9a) conformément aux premières données de commande, de sorte que le premier dispositif de tension (9a) applique une première tension de bande prédéterminée du substrat d'impression (1) sur le premier dispositif de tension (9a); et
- recevoir les deuxièmes données de mesure, générer des deuxièmes données de commande sur la base des deuxièmes données de mesure et commander le deuxième dispositif de tension (9b) conformément aux deuxièmes données de commande, de sorte que le deuxième dispositif de tension (9b) applique une deuxième tension de bande prédéterminée du substrat d'impression (1) sur le deuxième dispositif de tension (9b),
dans lequel le dispositif de commande (10) est de préférence configuré en outre, pendant un processus d'impression, pour maintenir constante la tension de bande du substrat d'impression (1) le long de la trajectoire de bande avant la table d'impression (3) et pour maintenir constante la tension de bande du substrat d'impression (1) le long de la trajectoire de bande derrière la table d'impression (3).

8. Dispositif selon au moins l'une des revendications précédentes, **caractérisé par** un dispositif de séparation, comprenant :
- un dispositif de contrôle (20) comportant un dispositif d'enregistrement d'image (21), qui est configuré pour
- enregistrer une image de l'image d'impression sur le matériau en bande (1),
- comparer l'image enregistrée de l'image d'impression sur le matériau en bande (1) avec des données d'image de comparaison,
- identifier l'image d'impression comme étant correcte si, sur la base de la comparaison de l'image d'impression sur le matériau en bande (1) avec les données d'image de comparaison, une correspondance entre l'image d'impression et les données d'image de comparaison est déterminée, et
- identifier l'image d'impression comme étant incorrecte si, sur la base de la comparaison de l'image imprimée sur le matériau en bande (1) avec les données d'image de comparaison, aucune correspondance n'est trouvée entre l'image d'impression et les données d'image de comparaison ;
- un dispositif de conditionnement (23) qui est configuré pour conditionner le matériau en bande (1) en feuilles individuelles ; et
- un commutateur de document (25), qui est configuré pour guider une feuille conditionnée sur un d'un premier trajet de transport (26a) et d'un deuxième trajet de transport (26b), dans lequel
- une feuille conditionnée avec une image d'impression qui a été déterminée comme une image d'impression correcte, est acheminée vers le premier trajet de transport (26a) et
- une feuille conditionnée avec une image d'impression qui a été déterminée comme une image d'impression incorrecte, est acheminée vers le deuxième trajet de transport (26b).

9. Procédé d'impression d'un substrat d'impression (1), comprenant de :
- appliquer un support d'impression sur un substrat d'impression (1), qui est un matériau en bande (1), qui est déplaçable le long d'une trajectoire de bande, au moyen d'au moins une tête d'impression (14a, 14b) d'une navette de tête d'impression (5), qui est disposée sur un premier côté du substrat d'impression (1) pour générer une image d'impression ;
- maintenir le substrat d'impression (1) au moyen d'un dispositif de maintien (11) d'une table d'impression (3), qui est disposé à l'opposé de la navette de tête d'impression (5) sur un deuxième côté du substrat d'impression (1), de sorte que pour impression un mouvement relatif est empêché entre la table d'impression (3) et le substrat d'impression (1), dans lequel un dispositif à vide compris dans le dispositif de maintien (11) avec des canaux est relié par ceux-ci à une surface d'appui de la table d'impression (3) et le substrat d'impression (1) aspire et maintient à la surface d'appui de la table d'impression (3) au moyen d'une pression négative; et
- déplacer le substrat d'impression (1) le long du trajet de bande, dans lequel la table d'impression (3) effectue un mouvement d'avance tandis que le dispositif de maintien (11) maintient le substrat d'impression (1) de telle manière que le mouvement d'avance soit transmis au substrat d'impression (1) et que la table d'impression (3) provoque un mouvement d'avance du substrat d'impression (1) le long de la trajectoire de bande, dans lequel la table d'impression (3) déplace le substrat d'impression (1) devant la navette de tête d'impression (5) dans une direction d'avance, et pendant le mouvement du substrat d'impression (1), la navette de tête d'impression (5) imprime le substrat d'impression,
**caractérisé en ce qu'**au moins une partie de la table d'impression (3), qui comprend la surface d'appui, comprend un matériau poreux, dans lequel les canaux, qui relient le dispositif à vide à la surface d'appui sont fournis par la porosité du matériau.

10. Procédé selon la revendication 9, **caractérisé en ce que** le substrat d'impression (1) est maintenu pendant le mouvement d'avance du substrat d'impression (1) de telle sorte qu'un mouvement relatif entre la table d'impression (3) et le substrat d'impression (1) pendant le mouvement d'avance soit empêché.

11. Procédé selon la revendication 9 ou 10, **caractérisé en ce que** le matériau en bande (1) est déplacé au moyen de la table d'impression (3) le long de la trajectoire de bande dans la direction d'avance (4), dans lequel la table d'impression (3) est déplacée dans la direction d'avance (4) ainsi que dans la direction inverse de la direction d'avance (4),
dans lequel la table d'impression (3) se déplace dans la direction d'avance (4) d'une position arrière à une position avant, tandis que le matériau en bande (1) est maintenu sur la table d'impression (3) au moyen du dispositif de maintien (11), et tire ainsi le matériau en bande (1) dans la direction d'avance (4) et
dans lequel ensuite le dispositif de maintien (11) libère le matériau en bande (1) de sorte qu'il se détache de la table d'impression (3), dans lequel la table d'impression (3) se déplace ensuite devant le matériau en bande (1) dans la direction inverse de la direction d'avance (4) de la position avant à la position arrière.
